# EUROPÄISCHE PATENTSCHRIFT

(11) **EP 2 510 747 B1**
(45) Veröffentlichungstag und Bekanntmachung des Hinweises auf die Patenterteilung: **06.07.2016**
(21) Anmeldenummer: 10790548.1
(22) Anmeldetag: 08.12.2010
(51) Int. Cl.: H05B 33/08, H05B 39/04

(54) **STEUERBARE RETROFIT LED-LAMPEN UND BELEUCHTUNGSSYSTEM MIT LED-LAMPE**
CONTROLLABLE RETROFIT LED LAMPS AND LIGHTING SYSTEM HAVING AN LED LAMP
LAMPES À DIODES ASSERVIES POUR RÉNOVATION ET SYSTÈME D'ÉCLAIRAGE AVEC LAMPE À DIODES

(30) Priorität: 08.12.2009 DE 102009047654
(43) Veröffentlichungstag der Anmeldung: 17.10.2012
(73) Patentinhaber: Tridonic AG, 8755 Ennenda (CH)
(72) Erfinder: PEREIRA, Eduardo, CH-8854 Siebnen (CH); ZIMMERMANN, Michael, CH-8888 Heiligkreuz (CH)
(74) Vertreter: Rupp, Christian
(86) Internationale Anmeldenummer: PCT/EP2010/069156
(87) Internationale Veröffentlichungsnummer: WO 2011/070058

(56) Entgegenhaltungen:
- WO-A2-2008/062419
- US-A1- 2004 066 142
- US-A1- 2004 105 264
- US-A1- 2006 208 667
- US-A1- 2009 160 627
- US-A1- 2009 237 011
- US-B1- 6 211 627

## Beschreibung

Die vorliegende Erfindung bezieht sich allgemein auf Lampenbetriebsgeräte bzw. Systeme sowie Verfahren, mittels denen Leuchtmittel wie beispielsweise Leuchtdioden oder Lumineszenzdioden (LEDs) betrieben werden können. Die Erfindung bezieht sich indessen insbesondere auf Retrofit LED-Lampen, also LED-Lampen, die hinsichtlich ihrer mechanischen und elektrischen Verbindungen als Ersatz von Glühlampen oder Halogenlampen ausgestaltet sind.

Unter "LED" ist durchgehend auch "OLED" zu verstehen.

Zur Realisierung größerer und komfortabler Beleuchtungssysteme ist es bereits bekannt, dass Lampenbetriebsgeräte durch die Übermittlung externer Steuerbefehle angesteuert werden können. Diese externe Vorgabe ermöglicht beispielsweise die Steuerung der Helligkeit einer von dem Lampenbetriebsgerät betriebenen Lichtquelle.

Aus der Offenlegungsschrift DE 102 30 103 A1 ist beispielsweise ein LED-Beleuchtungsmodul bekannt, das über eine mit Wechselstrom gespeiste Anordnung einer Anzahl von in Serie geschalteten LEDs verfügt. Diese LEDs sind als sogenannte LED-Dice auf einer Leiterplatte in einer Chip-on-Board (COB)-Technologie aufgebracht. Die wärmeleitende, keramische Leiterplatte des LED-Beleuchtungsmoduls verfügt über eine direkte Netzstromversorgung. Weiterhin sind die LEDs dieses Moduls dimmbar, wobei zur Dimmung der Helligkeit der von ihnen emittierten Photonenstrahlung eine Ansteuerung über einen an einen Bus angeschlossenen Mikrocontroller vorgeschlagen wird.

US 2004/0066142 offenbart eine Retrofit LED Lampe, die mit DMX Signale gesteuert werden kann.

Aufgrund insbesondere ihrer stromsparenden Eigenschaften werden LEDs in zunehmender Maße in Leuchtmitteln oder sogenannten Retrofit LED-Lampe eingesetzt, die die klassischen Glühfadenbirnen ersetzen können. Damit solche Leuchtmittel die Glühlampen überhaupt ersetzen können, ist es notwendig, dass die Bauform des Leuchtmittels im wesentlichen weiterhin so wie in klassischen Glühfadenbirnen verbleibt, und demgemäß weiterhin einen genormten Sockel aufweist. Ein derartiger Sockel bezieht sich beispielsweise auf einen sogenannten Edison-Sockels mit genormter Gewindekennung E27, E40 oder ähnliches. Bei der konventionellen Lampenfassung handelt es sich um eine genormte oder standardisierte Lampenfassung. Als weitere Beispiele sind die E14, E17 oder E27 Schraubgewinde zu nennen. Alternativ ist auch eine Lampenfassung denkbar, die für einen Niedervoltanschluss ausgelegt ist, wie eine G4, G5 oder G6 Fassung. Auch denkbar ist ein BA9 oder BA15 Bajonettfassung.

Gleiches gilt für LED-Lampen, die als Ersatz von Halogenleuchtmitteln ausgestaltet sind.

Bei der Verwendung von LEDs in Leuchtmitteln mit einem Glühlampensockel ist allerdings die aus der Offenlegungsschrift DE 102 30 103 A1 bekannten Möglichkeit einer externen Ansteuerung über einen Bus nicht mehr gegeben. In der Tat weist ein Glühlampensockel lediglich zwei elektrische Kontakte auf. Zum einen handelt es sich dabei um den Außenkontakt der Lampenfassung und ferner um den Fußkontakt des Sockels zur Herstellung des elektrischen Kontakts.

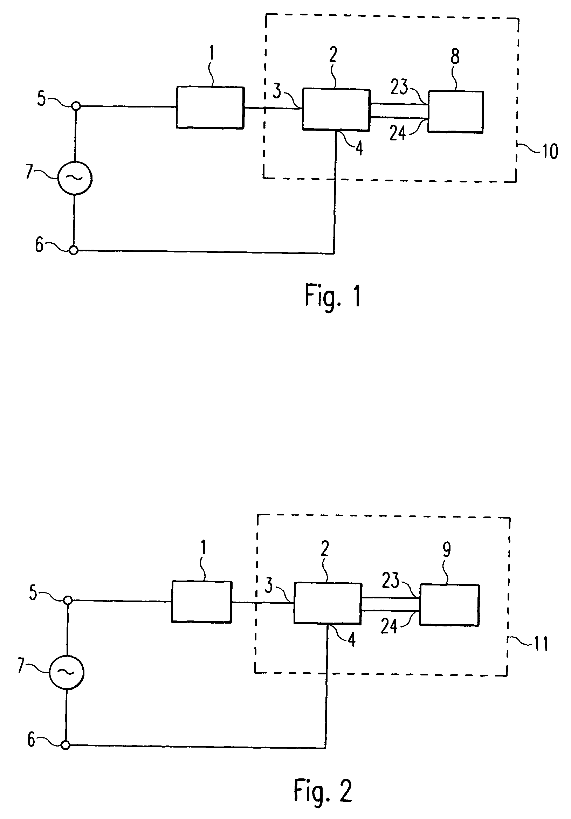

Fig. 1 zeigt eine Schaltungsanordnung mit einer zwischen zwei Kontakten 5, 6 zur Verfügung gestellten Wechselspannung 7 bzw. Netzspannung. Eine erste Serienleitung führt vom ersten Kontakt 5 zu einem Schalter oder Dimmer 1 und weiterhin zu einem ersten elektrischen Kontakt 3 einer Glühlampenfassung 2 und ferner zu einem ersten elektrischen Kontakt 23 einer Glühlampe 8. Die Glühlampe 8 weist einen genormten Sockel, einen Glühfaden, den ersten elektrischen Kontakt 23 zur Glühlampenfassung 2 und einen zweiten elektrischen Kontakt 24, der über die Fassung 2 zum zweiten Kontakt 6 der Wechselspannung 7 geführt wird. Das Ensemble Glühlampenfassung 2 und Glühlampe 8 wird mit dem Bezugszeichen 10 bezeichnet.

Fig. 2 zeigt ein Leuchtmittel in Form einer Retrofit LED-Lampe 9 mit dem genormten Glühlampensockel und LEDs statt Glühfaden. Die in der Fassung 2 montierte Retrofit LED-Lampe 9 wird mit dem Bezugszeichen 11 bezeichnet. Wie zu erkennen ist, kann eine Steuereinheit des Leuchtmittels 11 nicht über einen zusätzlichen Bus Daten bzw. Befehle empfangen, da der Sockel bzw. die Fassung keine entsprechende Anschlussmöglichkeit anbietet.

Es besteht nunmehr ein Bedürfnis, eine verbesserte Retrofit LED-Lampe bereitzustellen, die insbesondere auf einfacher Weise steuerbar ist.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Erfindungsgemäß wird also eine Retrofit LED-Lampe, insbesondere LED-"Glühbirne" vorgeschlagen, aufweisend einen Träger mit mindestens einer Leuchtdiode (LED), weiterhin aufweisend eine Treiberschaltung zur Stromversorgung der wenigstens einen LED und einen Sockel zum elektrischen sowie mechanischem Anschließen an einer konventionellen Lampenfassung. Die Retrofit LED-Lampe weist eine Trägerfrequenzanlage- bzw. Powerline Communication- (PLC) Einheit auf, die dazu ausgelegt ist, PLC-modulierte Daten über den Sockel zu empfangen und/oder zu senden.

Bei der konventionellen Lampenfassung handelt es sich um eine genormte oder standardisierte Lampenfassung. Beispiele umfassen einen E14, E17 oder E27 Schraubgewinde. Alternativ ist auch eine Lampenfassung denkbar, die für einen Niedervoltanschluss ausgelegt ist, wie eine G4, G5 oder G6 Fassung. Auch denkbar ist ein BA9 oder BA15 Bajonettfassung.

Die PLC-Einheit kann zum Empfang von Befehlen bezüglich der Helligkeit, der Farbe und/oder der Farbtemperatur der LED(s) ausgelegt sein.

Die Retrofit LED-Lampe weist eine Steuereinheit auf zur Regelung der Helligkeit der LED(s) entsprechend dem empfangenen Befehl.

Die Retrofit LED-Lampe weist einen Wechselstrom-Gleichstrom-Wandler zum Anschluss an eine Netzspannung, und einen an den Wechselstrom-Gleichstrom-Wandler angeschlossenen Gleichstromsteller zum Liefern eines Stroms zum Betreiben der LED auf.

Die Steuereinheit kann den Gleichstromsteller entsprechend des empfangenen Befehls steuern.

Nach einem weiteren Aspekt der Erfindung wird ein Schalter vorgeschlagen zum Ein-, Ausschalten und/oder Dimmen eines in einer konventionellen Lampenfassung eingesetzten Leuchtmittels. Der Schalter weist eine Trägerfrequenz- bzw. Powerline Communication- (PLC) Einheit auf, die dazu ausgelegt ist, PLC-modulierte Daten zu empfangen und/oder zu senden.

Nach einem weiteren Aspekt der Erfindung wird eine Anordnung vorgeschlagen zum Ein-, Ausschalten und/oder Dimmen eines in einer konventionellen Lampenfassung eingesetzten Leuchtmittels. Die Anordnung weist parallel zum Schalter eine Trägerfrequenz- bzw. Powerline Communication- (PLC) Einheit auf, die dazu ausgelegt ist, PLC-modulierte Daten zu empfangen und/oder zu senden.

Die PLC-Einheit kann zum Senden von Befehlen bezüglich der Helligkeit des in einer konventionellen Lampenfassung eingesetzten Leuchtmittels ausgelegt sein.

Nach einem weiteren Aspekt der Erfindung wird ein Beleuchtungssystem vorgeschlagen aufweisend mindestens eine konventionelle Lampenfassung und mindestens einen oben definierten Schalter.

Das Beleuchtungssystem kann mindestens eine oben definierte Retrofit LED-Lampe aufweisen, die in der konventionellen Lampenfassung eingesetzt ist.

Nach einem weiteren Aspekt der Erfindung wird ein Beleuchtungssystem vorgeschlagen, aufweisend eine zentrale Steuerung zum Senden von Befehlen via eine PLC-Sende-Einheit, mindestens eine konventionelle Lampenfassung und mindestens eine oben definierte Retrofit LED-Lampe, die in einer konventionellen Lampenfassung eingesetzt ist.

Weitere Merkmale, Vorteile und Eigenschaften der vorliegenden Erfindung sollen nunmehr anhand der Figuren der beigefügten Zeichnungen sowie der detaillierten Erläuterung eines Ausführungsbeispiels näher erläutert werden.
Fig. 1 zeigt eine schematische Ansicht einer an einer Wechselspannung angeschlossenen Glühlampe,
Fig. 2 zeigt eine schematische Ansicht eines an einer Wechselspannung angeschlossenen LED-Leuchtmittels,
Fig. 3 zeigt schematisch ein erstes Ausführungsbeispiel einer Retrofit LED-Lampe für konventionelle Netzspannungslampenfassungen,
Fig. 4 zeigt den Aufbau einer Retrofit LED-Lampe gemäß der Erfindung,
Fig. 5 zeigt eine schematische Ansicht eines erfindungsgemäßen Beleuchtungssystems, und
Fig. 6 zeigt eine schematische Ansicht eines alternativen erfindungsgemäßen Beleuchtungssystems.

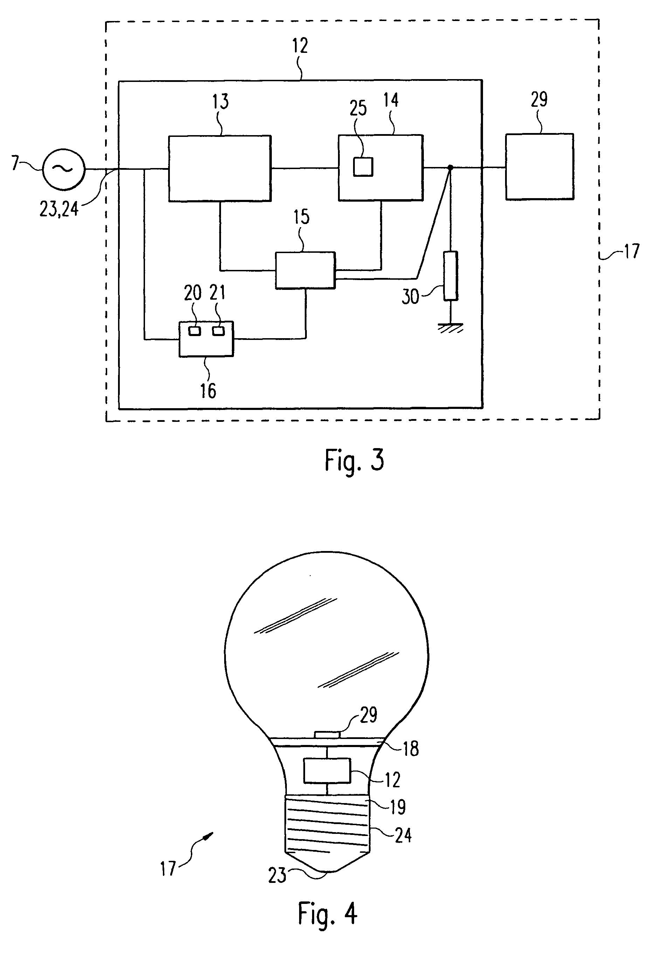

Fig. 3 und Fig. 4 zeigen eine erfindungsgemäße Ausführungsform einer Leuchtdioden (LED)-Lampe mit einem Träger bzw. LED-Modul 18. Dabei handelt es sich um eine Retrofit LED-Lampe 17 zum Einsatz in einer konventionellen Lampenfassung 2. Hierfür weist die Birne 17 einen konventionellen bzw. genormten Sockel 19, beispielsweise mit einem E14, E17 oder E27 Schraubgewinde auf. Alternativ ist auch ein Sockel denkbar, der für einen Niedervoltanschluss ausgelegt ist, wie ein G4, G5 oder G6 Stiftsockel. Auch denkbar ist ein BA9 oder BA15 Bajonettsockel.

Da die Retrofit LED-Lampe 17 durch eine entsprechende Lampenfassung mit Netzwechselspannung 7 oder mit Niedervoltspannung versorgt wird, wird zum korrekten Betrieb des LED-Moduls 18 eine Stromanpassung benötigt. Hierfür weist die LED-Lampe 17 eine Treiberschaltung 12 auf. Diese kann jeden für diesen Einsatz denkbaren Ansteuerschaltkreis aufweisen, wie er aus dem Stand der Technik bekannt ist. So ist beispielsweise an einen AC-DC-Wandler bzw. Wechselstrom-Gleichstrom-Wandler 13 zur Gleichrichtung einer Netzwechselspannung zu denken. Vorteilhafterweise kann diesem ein DC-DC-Wandler bzw. Gleichstromsteller 14 nachgeschaltet sein, der den (zeitlich gemittelten) Strom durch die LED(s) bspw. mittels PWM oder über die Stromamplitude regelt. Dabei kann ein Schalter (nicht gezeigt) eingesetzt werden, der mittels Pulsbreitenmodulation (PWM) geschaltet wird. Auch ist an eine nachgeschaltete Strombegrenzungsschaltung, beispielsweise mittels einer Transistorschaltung (nicht gezeigt), zu denken.

Die Steuerung des DC-DC-Wandlers 14 wird von einer Steuereinheit 15 der Treiberschaltung 12 übernommen, wobei die Steuereinheit 15 beispielsweise zu Steuerungszwecken Parameter des AC-DC-Wandlers 13, des DC-DC-Wandlers 14, oder anderer Bauteile der Treiberschaltung 12 erfassen kann.

Der Träger 18 kann eine oder mehrere LEDs 29 und/oder organische Leuchtdioden (OLEDs) aufweisen. Dabei sind insbesondere farbstoffkonvertierte bspw. blaue LEDs einsetzbar, oder RGB-LED-Module. Bei den farbstoffkonvertierten LEDs handelt es sich insbesondere um mindestens eine blaue LED, bei denen durch Farbstoffkonvertierungsmittel wie Phosphor ein Teil des ausgestrahlten blauen Lichts in gelbes Licht umgewandelt wird.

Vorzugsweise werden noch zusätzlich eine oder mehrere monochromatische, bspw. rote LEDs eingesetzt, die bspw. zu einem höheren Farbwiedergabewert führen und für ein wärmeres Licht sorgen. Die roten LEDs können dabei separat zu den Farbstoffkonvertierten blauen LEDs angeordnet sein, oder sie können sich neben diesen befinden, sodass ebenfalls ein Teil ihres ausgestrahlten roten Lichts farbstoffkonvertiert wird.

Die eine oder mehrere weissen LEDs können dabei vorzugsweise unabhängig zu der wenigstens einen monochromatischen LED angesteuert werden, nämlich über einen PLC-Bus, wie im folgenden näher erläutert werden wird. Somit kann bei einer weissen LED-Lampe die Helligkeit, die Farbe, die Farbwiedergabe (CRI-Wert und/oder die Farbtemperatur des sich aus den mehreren LEDs ergebenden Gesamtspektrums vorgegeben werden.

Erfindungsgemäß weist die Treiberschaltung 12 der Retrofit LED-Lampe 17 nun eine Trägerfrequenz- bzw. Powerline Communication- (PLC) Einheit 16 auf. Einerseits ist diese PLC-Einheit 16 mit den Versorgungsleitungen der Retrofit LED-Lampe 17 elektrisch verbunden. Vorzugsweise ist die PLC-Einheit 16 an den ersten elektrischen Kontakt bzw. Fußkontakt 23 des Sockels 19 und/oder an den zweiten elektrischen Kontakt bzw. Außenkontakt 24 des Sockels 19 angeschlossen. Denkbar ist auch die Möglichkeit, zwischen dem ersten und/oder zweiten elektrischen Kontakt 23, 24 und der PLC-Einheit 16 einen Schalter einzubauen. Derart kann die besagte PLC-Einheit 16 vom Versorgungsnetz abgekoppelt werden.

Die PLC-Busansteuerung der LED-Lampe kann unidirektional sein, d.h. es werden nur Steuerdaten zu der LED-Lampe 17 gesandt, bspw. von einer Buszentrale oder von einer manuellen Steuereinheit. Bei dem über PLC sendenden Teilnehmer kann es sich auch um einen Sensor (Bewegungsmelder, Helligkeitssensor,...) oder um eine einfache Bedieneinheit (Drehsteller oder auch Touchpanel) handeln. Es kann aber somit die PLC-Steuereinheit über eine Bussschnittstelle verfügen und somit an einen Bus für eine Beleuchtungssteuerung angeschlossen werden.

Alternativ oder zusätzlich kann eine LED-Lampe 17 bspw. Zustands (Temperatur, Alterung der Daten,...)- oder Fehlerinformationen über den PLC-Bus aussenden. Die Zustands- oder Fehlerinformationen können von der Steuerung in der LED-Lampe selbsttätig und/oder auf einen externen Befehl hin erfasst, abgespeichert und/oder ausgegeben werden.

Die Alterungsinformation kann über einen Betriebsanzahl- oder Betriebsdauer-Zähler in der LED-Lampe ermittelt werden. Alternativ oder zusätzlich kann die Alterung der Led-Lampe anhand wenigstens einer internen Messung, insbesondere einer internen Messung eines die Alterung wiedergebenden elektrischen oder optischen Parameter erfolgen.

Ein Demodulator 20 ist Teil der PLC-Einheit 16, so dass eine mögliche Datenübertragung über das Stromnetz und über die Versorgungskontakte der Retrofit LED-Lampe 17 demoduliert werden kann. Es handelt sich dabei um einen gemäß dem Stand der Technik bekannten Demodulator, der je nach Art der Modulation ein entsprechendes dem Fachmann bekanntes Verfahren zur Demodulation anwendet. Die Modulation kann sowohl auf einem analogen Verfahren, wie beispielsweise bei der Frequenzmodulation (FM), als auch auf einem digitalen Verfahren basieren, wie beispielsweise bei der Amplitudenmodulation ASK (Amplitude Shift Keying) oder der Quadraturphasenumtastung QPSK (Quadrature Phase Shift Keying). Der Demodulator wird auch vorzugsweise dem Frequenzbereich angepasst, in dem Signale zu erwarten sind.

In der PLC-Einheit 16 kann zusätzlich ein Demultiplexer 21 vorgesehen sein. Vorteil dieser Variante ist, dass mehrere über das Stromnetz parallel gesendete Nutzsignale von der Retrofit LED-Lampe 17 empfangen werden können. Diese Nutzsignale werden entsprechend der benutzten Multiplextechnik - Zeitmultiplex, Frequenzmultiplex oder Codemultiplex - vom Demultiplexer 21 wieder gewonnen.

Das oder die von der PLC-Einheit 16 gewonnene Signale werden der Steuereinheit 15 zugeführt, wobei diese Signale insbesondere Befehle zum Einschalten, Ausschalten oder Dimmen der Retrofit LED-Lampe 17 sein können. Vorzugsweise besteht der Befehl in einem Sollwert des Stroms durch die LEDs 29 der Retrofit LED-Lampe 17. Die Steuereinheit 15, die als Mikrocontroller oder als Anwendungsspezifische integrierte Schaltung (ASIC) ausgebildet sein kann, steuert oder regelt entsprechend diesem Befehl die von der Retrofit LED-Lampe 17 generierte Helligkeit.

Eine Möglichkeit der Helligkeitssteuerung oder vorzugsweise -Regelegung kann beispielsweise darin bestehen, dass im Gleichstromsteller 14 ein Schaltregler 25 entsprechend einem ihm von der Steuereinheit 15 zugeführten Steuersignal den Strom durch die Retrofit LED-Lampe 17 regelt. Bekanntermaßen wird der Strom durch die LEDs 29 der Retrofit LED-Lampe 17 und somit die Helligkeit durch das Verhältnis des Ein- und Ausschaltens des Schaltreglers 25 bestimmt.

Zur Regelung der Helligkeit erfasst die Steuereinheit 15 ein oder mehrere Parameter der elektrischen Schaltung innerhalb der Retrofit LED-Lampe 17. Beispielsweise kann zu diesem Zweck ein Messwiderstand 30 in Form eines ohmschen Widerstandes in Serie mit den LEDs 29 angeordnet sein. Zur Regelung des Stroms durch die LEDs 29 wird dann der Spannungsabfall über dem Messwiderstand 30 erfasst und als Messsignal der Steuereinheit 15 zugeführt. In der Steuereinheit 15 wird der aus diesem Messsignal erfasste Strom durch die LEDs 29 mit dem von der PLC-Einheit 16 empfangenen Sollwert des Stroms durch die LEDs 29 verglichen, so dass der tatsächliche Strom durch die LEDs 29 entsprechend geregelt werden kann.

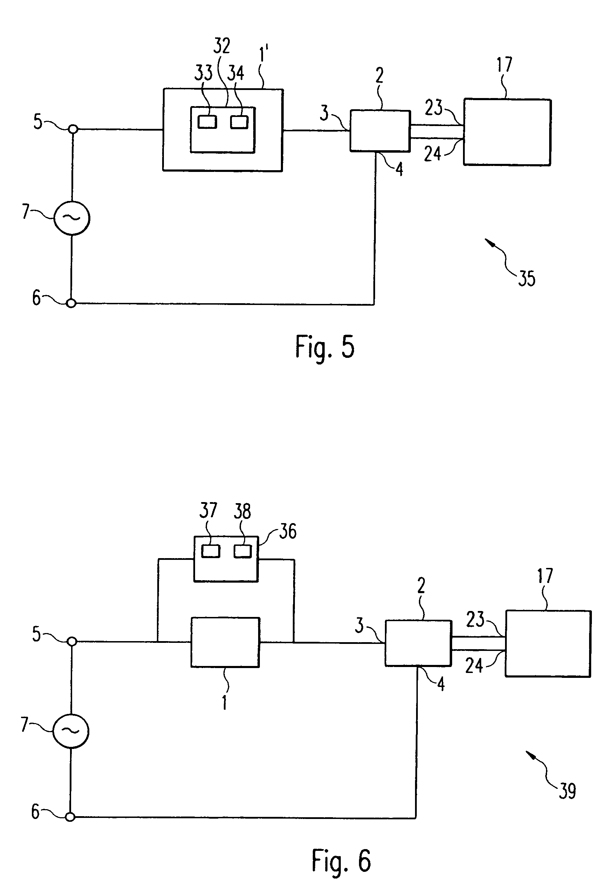

In Fig. 5 ist eine schematische Ansicht eines erfindungsgemäßen Beleuchtungssystems 35 gezeigt. Das Beleuchtungssystems 35 umfasst die in Fig. 3 und Fig. 4 gezeigte Retrofit LED-Lampe 17. Das System 35 umfasst weiterhin einen Schalter oder Dimmer 1' zum Ein- und Ausschalten sowie Dimmen der Retrofit LED-Lampe 17, und eine konventionelle bzw. genormte Lampenfassung 2, in welcher die Retrofit LED-Lampe 17 eingesetzt werden kann.

Der Schalter oder Dimmer 1' beinhaltet in dieser Ausführung eine PLC-Sende-Einheit 32, die dazu ausgelegt ist, Nutzdaten über das Stromnetz zu modulieren und übertragen. Hierfür ist ein Modulator 33 in der PLC-Sende-Einheit 32 vorgesehen, wobei der Modulator 33 und der Demodulator 20 der Retrofit LED-Lampe 17 aufeinander angepasst sind. So kann der Demodulator 20 mindestens die Modulationsverfahren und die Frequenzbereiche verarbeiten, die vom Demodulator 20 auch benutzt werden.

Vorzugsweise weist die PLC-Sende-Einheit 32 auch ein Multiplexer 34 zur simultanen Übertragung von mehreren Nutzsignalen über das Stromnetz. In der Retrofit LED-Lampe 17 ist dann ein Demultiplexer 21 vorgesehen, der das vom Multiplexer 34 erzeugte Signal entsprechend dem benutzten Multiplexverfahren wieder entbündeln kann. Nach der Entbündelung durch den Demultiplexer 21 kann dann der Demodulator 20 das Signal demodulieren.

Grundsätzlich kann das Beleuchtungssystem 35 mehrere Paare von Lampenfassungen 2 und LED-Lampen 17 umfassen. In diesem Fall dient der eine Schalter oder Dimmer 1' zum gleichzeitigen Ein- und Ausschalten sowie Dimmen aller LED-Lampen 17. Die PLC-Sendeeinheit 32 sendet entsprechend nur einen Befehl über das Stromnetz. Dieser Befehl wird von den verschiedenen PLC-Einheiten 16 der verschiedenen LED-Lampen 17 empfangen und alle LEDs des Systems 35 werden mit einem ähnlichen Helligkeits-Sollwert angesteuert.

Alternativ zu diesem Ausführungsbeispiel kann das Beleuchtungssystem 35 auch noch mehrere Schalter oder Dimmer 1' aufweisen, die jeweils über eine PLC-Sende-Einheit 33 einen Befehl für eine einzelne oder für eine Gruppe von LED-Lampen 17 aussenden.

Alternative dazu können auch mehrere Schalter oder Dimmer 1' eine einzige Retrofit LED-Lampe 17 über ein Powerline-Verfahren ansteuern. Die PLC-Einheit 16 einer derartigen Retrofit LED-Lampe 17 ist in der Lage, verschiedene Nutzsignale ausgehend von verschiedenen PLC-Sende-Einheiten 32 zu empfangen und der Steuereinheit 15 zu wiedergeben. Die Steuereinheit 15 kann in diesem Fall unterschiedliche Prioritätsmechanismen anwenden. So kann sie beispielsweise die Befehle der verschiedenen PLC-Sende-Einheiten 32 nacheinander berücksichtigen. Um eventuell zu schnelle Helligkeitsveränderungen zu verhindern, kann aber auch nach dem Eingang eines ersten Befehls während einer bestimmten Zeit die von anderen PLC-Sende-Einheiten 32 ausgehenden Befehle ignoriert werden.

In der Ausführung der Fig. 5 ist es vorgesehen, dass der erfindungsgemäße Schalter oder Dimmer 1' einen herkömmlichen Schalter oder Dimmer 1 zum Steuern einer Glühlampe 8 ersetzt. Beispielsweise kann dadurch ein Schalter oder Dimmer 1 ersetzt werden, der auf Basis einer Phasenanschnittsteuerung eine Glühlampe 8 dimmen kann.

Fig. 6 zeigt in diesem Zusammenhang eine schematische Ansicht eines alternativen erfindungsgemäßen Beleuchtungssystems 39, in dem der herkömmliche Schalter oder Dimmer 1 bspw. für eine Glühlampe 8 nicht ersetzt, sondern durch eine PLC-Sendeeinheit (PLC-Modulator) 36 ergänzt wird. Die Funktionsweise ist ähnlich der in Fig. 5 gezeigten PLC-Sendeeinheit 32.

Eine einzige manuelle oder als Signal vorgegebene Dimmvorgabe wird also gemäss diesem Aspekt durch den "Kombi-Dimmer" in wenigstens zwei unterschiedliche Protokolle umgesetzt, die als physikalischen Träger die Spannungsversorgung für die angeschlossenen Leuchtmittel gemein haben. An diesen Kombi-Dimmer angeschlossene Betriebsgeräte für Leuchtmittel können dazu ausgelegt sein, beide oder nur ein Protokoll auszuwerten. Unter Protokoll ist dabei eine analoge oder digitale Signalübertragung zu verstehen. Im Falle des Phasenanschnitts-Protokolls oder des Amplitudenmodulations-Protokoll kann sich diese Signalübertragung direkt, d.h. ohne signaltechnische Auswertung auf die Leuchtmittelleistung niederschlagen.

Wie in Fig. 6 gezeigt wird die PLC-Sende-Einheit 36 vorzugsweise in parallel zum Schalter, Taster oder Dimmer 1 geschaltet, kann jedoch alternativ auch in Serie mit diesem angeordnet sein. Das parallele Einschalten ist insoweit vorteilhaft, dass auch mit einem geöffnetem Schalter oder Dimmer 1 das Senden von Befehlen möglich ist. Die LED-Lampe 7 und ggf. weitere mit einem PLC-Modulator versehene Betriebsgeräte für Leuchtmitteö kann/können somit ausgehend von einem herkömmlichen Dimmer (bspw. einem Phasenanschnittsdimmer) über das PLC-Protokoll gedimmt werden. Ggf. können andere Betriebsgeräte, wie bspw. Glühlampen, durch ein anderes Protokoll, insbesondere Phasenschnitt gedimmt werden.

Somit können sowohl konventionelle Lampen (Glühlampen) als auch die LED- oder anderen Retrofit-Lampen (bspw. Gasentladungs-Energiesparlampen oder Halogenlampen mit einer Ansteuerelektronik) über eine Dimmer-Einheit gesteuert werden. So kann beispielsweise das Dimmer-Signal (als Phasenanschnitt) die Glühlampen steuern, und die Modulator-Einheit über das modulierte Signal die Retrofit-Lampen mit Ansteuerelektronik.

Die PLC-Einheit ist eine Modulatoreinheit, d.h. es wird auf die Netzspannung zumindest für Teilbereiche der Netzspannungshalbwelle ein höherfrequentes Signal aufmoduliert (vorzugsweise mit geringer Amplitude als die Netzspannung selbst). Es kann auch eine Phasenmodulation (bspw. Phase Shift Keying) angewendet werden (eine besondere Form des Phase Shift Keying ist bereits erwähnt).

Die Retrofit Lampe kann zusätzlich zur Ansteuerschaltung zur Speisung der Lampe auch eine abschaltbare Grundlast für eine korrekte Funktion in Zusammenhang mit dem Dimmer aufweisen, insbesondere wenn dieser wie beschrieben eine Phasenanschnittsfunktion aufweist.

Die Modulation kann auch durch den Dimmer selbst erfolgen, beispielsweise bei einem elektronischen Dimmer, der einen steuerbaren Schalter enthält. Dieser kann sowohl einen Phasenanschnitt- oder abschnitt bewirken und gleichzeitig auch das modulierte Signal erzeugen. Jedoch ist vermutlich eine Kombination von Dimmer und Modulator als zwei parallel vorhandene System in einem Dimmergehäuse (können auch seriell verschaltet sein) in leichter zu realisieren.

Die PLC-Sende-Einheit 36 kann unabhängig vom Schalter oder Dimmer 1 Befehle senden, oder dazu ausgelegt sein, die Betätigung bzw. das Umschalten des Schalters oder Dimmers 1 zu erfassen und entsprechend Befehle zu senden.

In den oben beschriebenen Ausführungsbeispielen ist die PLC-Einheit 16 der Retrofit LED-Lampe 17 dazu ausgelegt, Befehle ausgehend von einem PLC-Sender zu empfangen und der Steuereinheit 15 weiterzuleiten. Zusätzlich dazu oder auch alternativ dazu kann diese PLC-Einheit 16 selbst Daten über das Stromnetz senden. Um diese Funktion zu gewährleisten umfasst sie einen Modulator (nicht gezeigt) und vorzugsweise noch einen Multiplexer (nicht gezeigt). Somit kann eine Retrofit LED-Lampe 17 Daten wie Betriebsparameter des LEDs oder ähnliche senden, wobei diese Daten beispielsweise von einer zentralen Steuerung (nicht gezeigt) via einen PLC-Empfänger gesammelt werden können zwecks Überwachung des Beleuchtungssystems.

Falls die LED-Lampen 17 eines Systems über die Sende- und über die Empfangsfunktion verfügen, können diese untereinander Daten wie Befehle oder Betriebsparameter sich weiterleiten.

In den oben beschriebenen Ausführungsbeispielen ist die PLC-Einheit 16 der Retrofit LED-Lampe 17 dazu ausgelegt, Befehle ausgehend von einem PLC-Sender im Bereich eines Schalters oder Dimmers 1, 1' zu empfangen. Alternative Ausführungen sind auch denkbar, wo eine zentrale Steuerung (nicht gezeigt) Befehle ausgibt und über das Stromnetz sendet. Die einzelnen an diesem Stromnetz angeschlossenen LED-Lampe 17 sind demnach in der Lage, diese zentralen Befehle zu empfangen und für die Steuerung bzw. Regelung der LEDs 29 zu benutzen.

Die Befehle, die über das Powerline-Verfahren gesendet und verbreite werden, können auch Adressierungsinformationen beinhalten. Somit kann eine bestimmte Gruppe von LED-Lampe 17 angesteuert werden.

Falls eine PLC-Einheit 16 das empfangene Signal nicht demodulieren kann und das Nutzsignal nicht wiederherstellen kann wegen z.B. Interferenzen auf dem Stromnetz, ist es vorteilhaft, dass diese PLC-Einheit 16 eine entsprechende Meldung sendet, um ein weiteres Senden des Befehls zu fordern.

Alternativ oder zusätzlich dazu ist es auch vorgesehen, dass eine PLC-Sende-Einheit 32, 36, die in einem Schalter oder Dimmer 1' integriert ist, oder die in parallel oder in Serie zu einem Schalter oder Dimmer 1 geschaltet ist, eine PLC-Empfangs-Einheit (nicht gezeigt) aufweist. Derart kann sie mögliche Rückmeldungen einer Retrofit LED-Lampe 17 empfangen. Im oben beschriebenen Fall, dass z.B. wegen Interferenzen die Retrofit LED-Lampe 17 das erneute Senden des Befehls fordert, so kann die PLC-Sende-Einheit 32, 36 diese Nachricht von der LED-Lampe 17 auch empfangen und den Befehl erneut via Powerline-Verfahren übersenden.

Vorteilhaft ist die Erfindung, da dadurch ein herkömmlicher Schalter oder Dimmer 1 zum Steuern einer Glühlampe 8 ersetzt oder ergänzt werden kann, um eine erfindungsgemäße in einer konventionellen bzw. genormten Glühlampenfassung eingesetzte Retrofit LED-Lampe 17 zu steuern.

Die Erfindung ersetzt oder ergänzt die traditionelle Phasenanschnittsteuerung einer Glühlampe 8 durch eine Powerline-Kommunikation zwischen Schalter und Retrofit LED-Lampe 17.

Obwohl ein herkömmlicher Schalter oder Dimmer mit Phasenanschnittsteuerung eine LED nicht steuern kann, macht es die Erfindung möglich, durch Integration von PLC-Modulen LED-Lampe 17 in konventionellen bzw. genormten Glühlampenfassung oder Halogenfassungen dimmen zu können.

### Bezugszeichenliste:

- 1: Schalter oder Dimmer
- 2: Glühlampenfassung
- 3: Kontakt der Glühlampenfassung
- 4: Kontakt der Glühlampenfassung
- 5: Erster Kontakt der Wechselspannung
- 6: Zweiter Kontakt der Wechselspannung
- 7: Wechselspannung
- 8: Glühlampe
- 9: Retrofit LED-Lampe
- 12: Treiberschaltung
- 13: Wechselstrom-Gleichstrom-Wandler, AC-DC-Wandler
- 14: Gleichstromsteller, DC-DC-Wandler
- 15: Steuereinheit
- 16: Trägerfrequenzanlage- bzw. Powerline Communication-(PLC) Einheit
- 17: Retrofit LED-Lampe
- 18: Träger
- 19: Sockel
- 20: Demodulator
- 21: Demultiplexer
- 23: Erster elektrischer Kontakt bzw. Fußkontakt des Sockels
- 24: Zweiter elektrischer Kontakt bzw. Außenkontakt des Sockels
- 25: Schaltregler
- 29: Leuchtdiode (LED)
- 30: Messwiderstand
- 32: PLC-Sende-Einheit (PLC-Modulator)
- 33: Modulator
- 34: Multiplexer
- 35: Beleuchtungssystem
- 36: PLC-Sende-Einheit
- 37: Modulator
- 38: Multiplexer
- 39: Beleuchtungssystem

## Patentansprüche

1. Retrofit LED-Lampe (17), aufweisend einen Träger (18) mit mindestens einer Leuchtdiode (LED) (29), weiterhin aufweisend eine Treiberschaltung (12) zur Stromversorgung der LED (29) und einen Sockel (19) zum elektrischen sowie mechanischem Anschließen an eine konventionelle Lampenfassung,
**dadurch gekennzeichnet, dass**
die Retrofit LED-Lampe (17) eine PLC-Einheit (16) aufweist, die dazu ausgelegt ist, von einem Dimmer, der auch einen Phasenanschnitt der Versorgungsspannung ausführt, auf die Versorgungsspannung der Retrofit LED-Lampe (17) mittels PLC modulierte Daten über den Sockel (19) zu empfangen und/oder zu senden, wobei die PLC Einheit (16) einen Demodulator aufweist, der dazu eingerichtet ist, Nutzsignale zu demodulieren und wobei die demodulierten Signale einer Steuereinheit (15) zuführbar sind, die dazu eingerichtet ist, abhängig von zugeführten demodulierten Signalen die Retrofit LED-Lampe (17) zu steuern.

2. Retrofit LED-Lampe (17) nach Anspruch 1,
wobei die PLC-Einheit (16) zum Empfang von Befehlen bezüglich der Helligkeit, Farbe und/oder Farbtemperatur der wenigstens eine LED (29) ausgelegt ist,
wobei bei mehreren LEDs vorzugsweise wenigstens zweier unterschiedlicher Spektren die Helligkeit, Farbe und/oder Farbtemperatur einzelner LED(s) oder des sich ergebenden Mischspektrums mittels der Befehle vorgebbar sind.

3. Retrofit LED-Lampe (17) nach einem der vorhergehenden Ansprüche,
aufweisend einen Wechselstrom-Gleichstrom-Wandler (13) zum Anschluss an einen Netzstrom, und einen an den Wechselstrom-Gleichstrom-Wandler (13) angeschlossenen Gleichstromsteller (14) zum Liefern eines Stroms zum Betreiben der LED (29).

4. Retrofit LED-Lampe (17) nach Anspruch 1,
wobei die Steuereinheit (15) den Gleichstromsteller (14) entsprechend des empfangenen Befehls steuert.

5. Beleuchtungssystem,
aufweisend wenigstens ein Leuchtmittel, darunter wenigstens eine Retrofit LED-Lampe nach Anspruch 1 sowie einen manuell betätigbaren Dimmer, der für eine PLC-Modulation und einen Phasenanschnitt der Versorgungsspannung der Retrofit LED-Lampe ausgelegt ist.

6. Verfahren zum Betrieb wenigstens einer Retrofit LED-Lampe (17), aufweisend einen Träger (18) mit mindestens einer Leuchtdiode (LED) (29), weiterhin aufweisend eine Treiberschaltung (12) zur Stromversorgung der LED (29) und einen Sockel (19) zum elektrischen sowie mechanischem Anschließen an eine konventionelle Lampenfassung,
wobei das Verfahren den Schritt aufweist:
- PLC-Modulation der Versorgungsspannung der Retrofit LED-Lampe durch einen Dimmer, der auch einen Phasenanschnitt ausführt, und
- Demodulation der Trägerfrequenzanlage- bzw. Powerline Communication- (PLC) Einheit (16) in der Retrofit LED-Lampe (17) nach Anspruch 1.

## Claims

1. Retrofit LED lamp (17) comprising a carrier (18) with at least one light emitting diode (LED) (29), further comprising a driver circuit (12) for current supply
to the LED (29) and a socket (19) for electrical and mechanical connection to a conventional lamp holder,
**characterized in that**,
the retrofit LED lamp (17) has a PLC unit (16), which is designed to receive and/or send via the socket (19) PLC data modulated on the supply voltage of the retrofit LED lamp (17) by a dimmer, which also performs phase control of the supply voltage, wherein the PLC unit (16) comprises a demodulator which is designed to demodulate useful signals, and wherein the demodulated signals can be fed to a control unit (15) which is designed to control the retrofit LED lamp (17) as a function of the demodulated signals supplied.

2. Retrofit LED lamp (17) according to claim 1,
wherein the PLC unit (16) is designed to receive commands relating to the brightness, color and/or color temperature of the at least one LED (29),
wherein in the case of a plurality of LEDs, preferably of at least two different spectra, the brightness, color and/or color temperature of individual LED(s) or the resulting mixed spectrum can be controlled by means of the commands.

3. Retrofit LED lamp (17) according to any one of the preceding claims, comprising an AC-DC converter (13) for connection to mains current and a DC-DC converter (14) connected to the AC-DC converter (13) for supplying a current to operate the LED (29).

4. Retrofit LED lamp (17) according to claim 1,
wherein the control unit (15) controls the DC-DC converter (14) as a function of the received commands.

5. Lighting system comprising at least one light source, namely at least a retrofit LED lamp according to claim 1 and a manually-operated dimmer, which is designed for PLC modulation and phase control of the supply voltage to the retrofit LED lamp.

6. Method for operating at least one retrofit LED lamp (17) comprising a carrier (18) with at least one light emitting diode (LED) (29), further comprising a driver circuit (12) for current supply to the LED (29) and a socket (19) for electrical and mechanical connection to a conventional lamp holder,
wherein the method comprises the following steps:
- PLC modulation of the supply voltage to the retrofit LED lamp through a dimmer which also performs phase control, and
- demodulation of the carrier frequency unit or Power Line Communication (PLC) unit (16) in the retrofit LED lamp (17) according to claim 1.

## Revendications

1. Lampe LED de rétrofit (17), comprenant un support (18) avec au moins une diode électroluminescente (LED) (29), comprenant en outre un circuit pilote (12) pour l'alimentation en courant de la LED (29) et un socle (19) pour le raccordement électrique et mécanique à une douille de lampe conventionnelle,
**caractérisée en ce que**
la lampe LED de rétrofit (17) comprend une unité PLC (16) qui est conçue pour recevoir et/ou émettre, par l'intermédiaire du socle (19) des données modulées au moyen de l'unité PLC, par un gradateur, qui effectue également un découpage de chaîne de l'alimentation en tension, sur la tension d'alimentation de la lampe LED de rétrofit (17), l'unité PLC (16) comprenant un démodulateur qui est conçu pour démoduler des signaux utilitaires et les signaux démodulés pouvant être introduits dans une unité de commande (15) qui est conçue pour commander la lampe LED de rétrofit (17) en fonction des signaux démodulés introduits.

2. Lampe LED de rétrofit (17) selon la revendication 1,
l'unité PLC (16) étant conçue pour la réception d'instructions concernant la luminosité, la couleur et/ou la température de couleur de l'au moins une LED (29),
dans le cas de plusieurs LED, de préférence au moins d'au moins deux spectres différents, la luminosité, la couleur et/ou la température de couleur de certaines LED ou du spectre mixte qui en résulte pouvant être définies à l'aide des instructions.

3. Lampe LED de rétrofit (17) selon l'une des revendications précédentes, comprenant un convertisseur courant alternatif-courant continu (13) pour le raccordement à un courant de secteur et un régulateur de courant continu (14), raccordé au convertisseur courant alternatif-courant continu (13), pour la fourniture d'un courant pour l'exploitation des LED (29).

4. Lampe LED de rétrofit (17) selon la revendication 1,
l'unité de commande (15) contrôlant le régulateur de courant continu (14) en fonction de l'instruction reçue.

5. Système d'éclairage,
comprenant au moins un luminaire, dont au moins une lampe LED de rétrofit selon la revendication 1 ainsi qu'un gradateur à actionnement manuel, qui est conçu pour une modulation PLC et un découpage de phase de la tension d'alimentation de la lampe LED de

6. Procédé pour l'exploitation d'au moins une lampe LED de rétrofit (17), comprenant un support (18) avec au moins une diode électroluminescente (LED) (29), comprenant en outre un circuit pilote (12) pour l'alimentation en courant de la LED (29) et un socle (19) pour le raccordement électrique et mécanique à une douille de lampe conventionnelle,
le procédé comprenant les étapes suivantes :
- modulation PLC de la tension d'alimentation de la lampe LED de rétrofit par un gradateur qui effectue également un découpage de phase, et
- démodulation de l'installation à fréquence porteuse ou de l'unité Powerline Communication (PLC) dans la lampe LED de rétrofit (17) selon la revendication 1.
